Europäisches Patentamt

European Patent Office

Office européen des brevets

(11) Veröffentlichungsnummer: **0 311 758**
**A1**

## (12) EUROPÄISCHE PATENTANMELDUNG

(21) Anmeldenummer: 88111834.3

(22) Anmeldetag: 22.07.88

(51) Int. Cl.⁴: **B01D 53/36**

(30) Priorität: 16.10.87 DE 3735112

(43) Veröffentlichungstag der Anmeldung:
**19.04.89 Patentblatt 89/16**

(84) Benannte Vertragsstaaten:
**AT BE CH DE ES FR GB GR IT LI LU NL SE**

(71) Anmelder: **DIDIER ENGINEERING GmbH**
**Alfredstrasse 28 Postfach 10 09 45**
**D-4300 Essen 1(DE)**

Anmelder: **DIDIER-WERKE AG**
**Lessingstrasse 16-18**
**D-6200 Wiesbaden(DE)**

(72) Erfinder: **Mengis, Wolfgang, Dr.**
**Rüttenscheider Strasse 65**
**D-4300 Essen 1(DE)**

(74) Vertreter: **Brückner, Raimund**
**c/o Didier-Werke AG Hauptverw./Patentabt.**
**Postfach 2025 Lessingstrasse 16-18**
**D-6200 Wiesbaden1(DE)**

(54) **Vorrichtung zum Dosieren von Ammoniak in einen Abgasstrom.**

(57) Die Erfindung bezieht sich auf eine Vorrichtung zum Dosieren von $NH_3$ oder dergleichen Reduktionsmittel in den Abgasstrom, insbesondere Rauchgasstrom, einer Anlage zur selektiven Kontaktreduktion von Stickoxiden mit über den Abgaskanalquerschnitt (5) verteilten Reduktionsmittelaustrittsöffnungen (2), von welchen jeweils mehrere gemeinsam mit einer Zuführungsleitung (1) verbunden sind, wobei die Reduktionsmittelaustrittsöffnungen von Düsen (2) gebildet sind, welche in Gruppen flächenmäßig in gleichen oder im wesentlichen gleichen Abständen (a) voneinander über einen Teilflächenbereich des Abgaskanalquerschnittes verteilt und zu von einer gemeinsamen Zuführungsleitung (1) versorgten, über den gesamten Abgaskanalquerschnitt in gleichen oder im wesentlichen gleichen Abständen (A) voneinander verteilten Düsenstöcken (3) zusammengefaßt sind, und wobei die Durchflußmengen an Reduktionsmittel für jeden auf einer Gruppe von Düsen (2) bestehenden Düsenstock oder zumindest einigen dieser Düsenstöcke (3) unabhängig von den anderen Düsenstöcken einstellbar ist.

FIG 1

## Vorrichtung zum Dosieren von Ammoniak in einen Abgasstrom

Die Erfindung bezieht sich auf eine Vorrichtung zum Dosieren von $NH_3$ oder dergleichen Reduktionsmittel in den Abgasstrom, insbesondere Rauchgasstrom einer Anlage zur selektiven Kontaktreduktion von Stickoxiden mit über den Abgaskanalquerschnitt verteilten Reduktionsmittelaustrittsöffnungen, von welchen jeweils mehrere gemeinsam mit einer Zuführungsleitung verbunden sind.

Zur Minderung von $NO_x$-Abgaskonzentrationen wird überwiegend nach dem Verfahren der selektiven Kontaktreduktion (SCR) an platten- oder wabenförmigen Katalysatorkörpern gearbeitet, bei welchem $NH_3$ - gegebenenfalls zuvor vermischt mit Luft -oder ein anderes Reduktionsmittel dem Abgas zudosiert wird. In dem Abgaskanal treten in der Regel lokale Schwankungen in den $NO_x$-Konzentrationen, den Rauchgasgeschwindigkeiten und den Sauerstoffkonzentrationen auf. Darüberhinaus ist zu berücksichtigen, daß z.B. bei großen Feuerungsanlagen die Rauchgaskanalquerschnitte bis zu 100 $m^2$ betragen können. Es bedarf daher einer Doriervorrichtung, die es gestattet, für derart großflächige Strömungen den lokal erforderlichen Reduktionsmittel-Massenstrom zu dosieren.

Bei bekannten Dosierungsvorrichtungen verlaufen mit Reduktionsmittelaustrittsöffnungen versehene Lanzen parallel oder als Kreuzgitter quer zum Abgaskanalquerschnitt. Jede Lanze wird von einer Reduktionsmittel-Zuführungsleitung versorgt. Hierdurch läßt sich lediglich eine "linienförmige" Reduktionsmittel-Dosierung und damit "linienförmige" Beeinflussung des Abgasstromes erreichen. Bei einer Anordnung der Lanzen als Kreuzgitter überlappen sich diese Bereiche zum Teil. Mit einer derartigen Doriervorrichtung kann den lokalen Unterschieden an $NO_x$-Konzentrationen, Rauchgasgeschwindigkeiten und Sauerstoffkonzentrationen jedoch nicht hinreichend Rechnung getragen werden. Bei einer Anordnung der mit Reduktionsmittelaustrittsöffnungen versehenen Lanzen als Kreuzgitter kommt der weitere anlagentechnische Nachteil hinzu, daß der Abgaskanal von zwei, drei oder gar vier Seiten durch Sammelleitungen oder extrem lange Lanzen umbaut werden muß, was einen unerwünscht hohen baulichen Aufwand erfordert.

Hiervon ausgehend ist Aufgabe der vorliegenden Erfindung die Schaffung einer Vorrichtung der eingangs genannten Art, mit welcher eine lokale Zumischung von Reduktionsmittel, insbesondere $NH_3$ in Anpassung an die lokalen Gegebenheiten von $NO_x$-Konzentration, Rauchgasgeschwindigkeit und Sauerstoffkonzentration mit geringem baulichem Aufwand erfolgen kann.

Diese Aufgabe wird erfindungsgemäß im wesentlichen dadurch gelöst, daß die Reduktionsmittelaustrittsöffnung von Düsen gebildet sind, welche in Gruppen flächenmäßig in gleichen oder im wesentlichen gleichen Abständen voneinander über einen Teilflächenbereich des Abgaskanalquerschnittes verteilt und zu von einer gemeinsamen Zuführungsleitung versorgten, über den gesamten Abgaskanalquerschnitt in gleichen oder im wesentlichen gleichen Abständen voneinander verteilten Düsenstöcken zusammengefaßt sind, und daß die Durchflußmengen an Reduktionsmittel für jeden aus einer Gruppe von Düsen bestehenden Düsenstock oder zumindest einigen dieser Düsenstöcke unabhängig von den anderen Düsenstöcken einstellbar ist.

Bei einer derartigen Vorrichtung können im Rahmen der Inbetriebnahme der SCR-Anlage die Profile der lokalen $NO_x$-Massenströme meßtechnisch ermittelt und dementsprechend die Durchflußmengen an Reduktionsmittel für einzelne Düsenstöcke voreingestellt werden. Dadurch kann im Betrieb möglichst nahe am stöchiometrisch erforderlichen Zumischverhältnis von Reduktionsmittel zu Abgas gearbeitet werden. Den lokalen $NO_x$-Unterschieden kann die lokale Beeinflussung durch Eindüsen des Reduktionsmittels entsprochen werden. Dies ist bei SCR-Anlagen mit hohem $NO_x$-Umsetzungsgrad besonders vorteilhaft. Die Einstellung der Reduktionsmittelzufuhr kann mittels Drosselventilen erfolgen, die außerhalb des Abgaskanals in den jeweiligen Zuführungsleitungen angeordnet sind, so daß sie im Abgaskanal nicht stören. Die erfundene Vorrichtung erlaubt damit eine differenzierte, flächenorientierte Dosierung von Reduktionsmitteln, wie Ammoniak, mittels einzelner Düsenstöcke, so daß lokal jeweils ein Teilvolumenstrom des Abgases mit der erforderlichen Reduktionsmittelmenge vermischt wird.

Allen wesentlichen Freiheitsgraden in der gesamten Auslegung der Reduktionsmittel-Dosierungsvorrichtung, wie Düsenanzahl, Düsenform, Düsendurchmesser, Düsenanordnung, Anzahl der Drosselventile und örtliche Verteilung der Düsen, deren Reduktionsmitteldurchsätze durch ein Drosselventil beeinflußbar sind, lassen sich bei der erfundenen Vorrichtung auf einfache und wirtschaftliche Weise verwirklichen. Sind beispielsweise vier Düsen im Karree als Gruppe zu einem Düsenstock zusammengefaßt, so ist der Mittenabstand der Düsenstöcke vorzugsweise doppelt so groß wie der Abstand der Düsen in einem Düsenstock untereinander, so daß auch die Düsen benachbarter Düsenstöcke im wesentlichen den gleichen Abstand voneinander haben, wie die Düsen innerhalb eines Düsenstockes. Damit sind die Düsen über die gesamte Querschnittsfläche des Abgaskanals im wesentlichen gleichmäßig verteilt. Dies gilt auch, wenn beispielsweise neun Düsen zu einem Düsenstock zusammengefaßt sind. In diesem Fall ist der Mittenabstand der Düsenstöcke vorzugsweise gleich dem Dreifachen des Düsenabstandes.

Vorzugsweise sind jeweils zwischen vier und neun Düsen zu einem Düsenstock in regulärer Anordnung zusammengefaßt, um jeweils einen Teilflächenbereich des Abgaskanalquerschnittes optimal zu beeinflussen.

Mit der Erfindung wird ferner vorgeschlagen, die Düsen als Freistrahldüsen auszubilden, um eine günstige Zumischung des Reduktionsmittels in den Abgasstrom zu erzielen.

Dabei blasen die Düsen vorzugsweise in Strömungsrichtung des Abgases ab, so daß das Ausströmen des Reduktionsmittels durch das anströmende Abgas nicht beeinträchtigt und die Düsenöffnung nicht verschmutzt wird.

Die erfundene Vorrichtung ist insbesondere dann von der erforderlichen Funktionswirksamkeit, wenn die Größe des von einem Düsenstock beeinflußbaren Teilflächenbereichs des Abgasquerschnittes zwischen etwa 1 m² und 4 m² liegt.

Damit jede Düse weitgehend die gleiche Durchflußrate besitzt, sind die Zuführungsleitungen und die Düsen vorzugsweise so ausgelegt, daß der Hauptdruckverlust in den Düsen erfolgt.

Damit die Abgasströmung durch die Dosiervorrichtung möglichst wenig behindert wird, sind die Zuführungsleitungen gemäß einer noch weiteren Ausgestaltung der Erfindung für je eine Reihe von Düsenstöcken in Abgasströmungsrichtung fluchtend hintereinander angeordnet.

Um eine gleichmäßige Beeinflussung des Abgasstromes zu erreichen, können die Zuführungsleitungen den Abgaskanalquerschnitt, z.B. von oben nach unten, vollständig durchqueren. Es ist aber auch möglich, die Zuführungsleitungen nur jeweils bis zu dem zugehörigen Düsenstock zu führen, um den Materialaufwand niedrig zu halten.

Eine möglichst einfache anlagentechnische Realisierung der erfindungsgemäßen Vorrichtung ergibt sich dann, wenn mehrere der vorzugsweise alle Zuführungsleitungen von einer gemeinsamen Sammelleitung ausgehen.

Weitere Ziele, Merkmale, Vorteile und Anwendungsmöglichkeiten der vorliegenden Erfindung ergeben sich aus der nachfolgenden Beschreibung von ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Figur 1 eine Prinzipskizze einer Dosierungsvorrichtung nach der Erfindung,

Figur 2 einen nach der Erfindung einzusetzenden Düsenstock mit vier Düsen,

Figur 3 einen erfindungsgemäß einzusetzenden Düsenstock mit neun Düsen, und

Figur 4 schematisch in Seitenansicht eine Reihe von fünf Düsenstöcken mit jeweils vier Düsen.

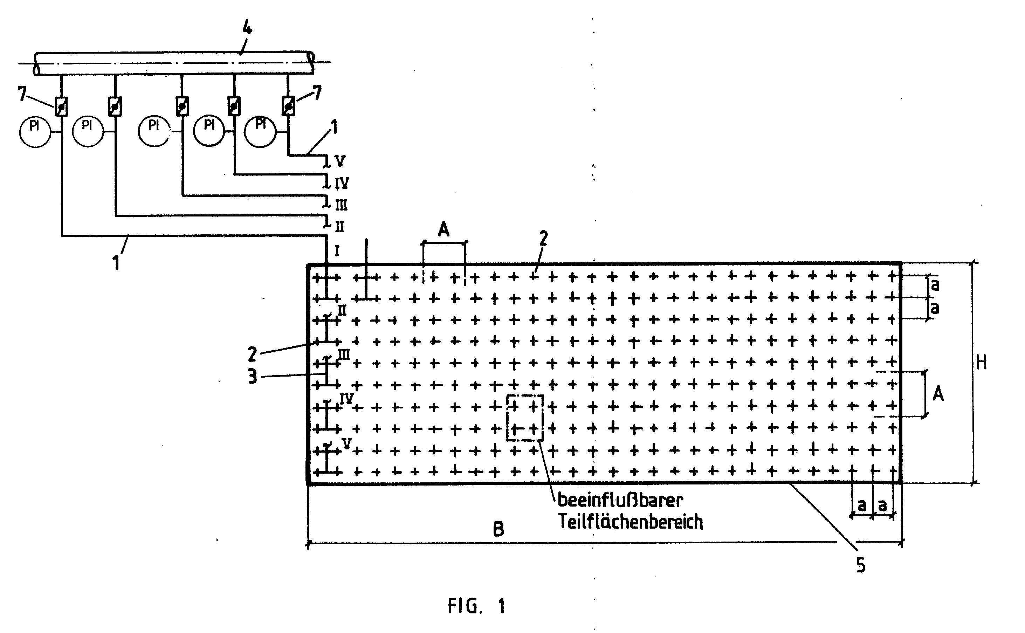

Die Dosiervorrichtung gemäß Figur 1 versorgt einen Abgaskanal 5 mit einem rechteckigen Querschnitt B (Breite) x H (Höhe). Innerhalb des Abgaskanalquerschnittes sind Düsen 2 in gleichen Abständen a voneinander verteilt angeordnet. Je vier Düsen 2 sind zu einem Düsenstock 3 zusammengefaßt. Die Mittenabstände A der Düsenstöcke 3 sind mit b bezeichnet, so daß alle Düsen 2 äquidistant angeordnet sind. Jeder Düsenstock 3 ist über eine Reduktionsmittel(NH₃)-Zuführungsleitung 1 mit einer außerhalb des Abgaskanalquerschnitts angeordneten Sammelleitung 4 verbunden. So sind beispielsweise die fünf in der ersten linken vertikalen Düsenreihe von Figur 1 angeordneten Düsenstöcke 3 (I - V) mit den jeweiligen Zuführungsleitungen 1 (I - V) verbunden. In jede Zuführungsleitung 1 ist ebenfalls außerhalb des Abgaskanalquerschnitts ein Drosselventil 7 zur individuellen Einstellung der Durchflußmenge an Reduktionsmittel in jeder einzelnen Zuführungsleitung 1 vorgesehen. Damit sind die Durchflußmengen an Reduktionsmittel für jeden aus einer Gruppe von Düsen 2 bestehenden Düsenstock 3 unabhängig von den anderen Düsenstöcken 3 einstellbar. Die erforderliche Einstellung kann vor Betriebsbeginn durch Messung der lokalen NO$_x$-Konzentrationen erfolgen oder auch ständig während des Betriebes unter Verwendung von lokalen NO$_x$-Sensoren und einer entsprechenden Regelschaltung auf den jeweils erforderlichen Wert eingestellt werden, so daß die gewünschte stöchiometrische Reduktionsmittelzugabe erfolgt.

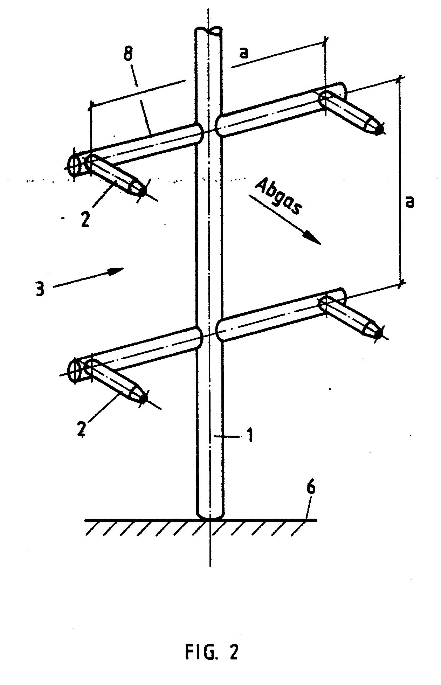

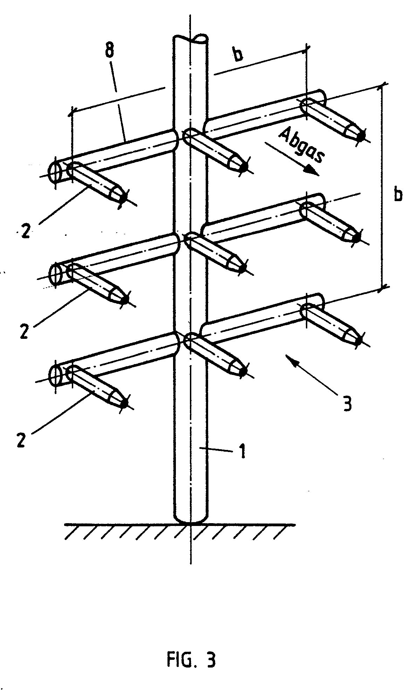

Wie aus Figuren 2 und 3 ersichtlich, sind die die Reduktionsmittelaustrittsöffnungen bildenden Düsen 2 als Freistrahldüsen ausgebildet und blasen in Strömungsrichtung des Abgases ab. Figur 2 veranschaulicht einen Düsenstock 3 mit vier im Quadrat angeordneten Düsen 2, während der Düsenstock 3 nach Figur 3 aus neun im Quadrat angeordneten Düsen 2 besteht. Die höhere Düsenzahl wird dann verwendet, wenn der Abstand zu der ersten Katalysatorebene geringer ist.

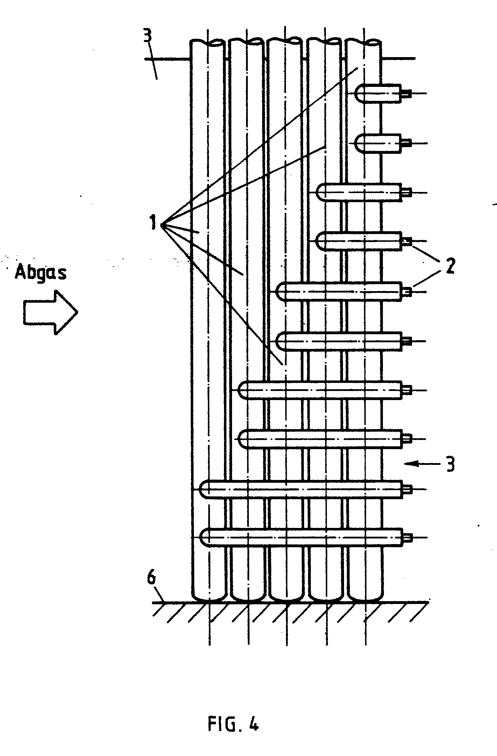

Aus Figur 4 ist ersichtlich, daß die Zuführungsleitungen 1 für je eine vertikale Reihe von Düsenstöcken 3 in Abgasströmungsrichtung fluchtend hintereinander angeordnet sind, um den Abgasstrom möglichst wenig zu beeinflussen. Bei Figur 4 handelt es sich um eine Vorrichtung mit fünf übereinander angeordneten Düsenstöcken 3 zu je vier Düsen 2. Dabei sind die Zuführungsleitungen 1 von oben bis zum Kanalboden 6 des Abgaskanals 3 heruntergezogen und auf dem Boden 6 des Abgaskanals 5 abgestützt. Die Zuführungsleitungen 1 könnten aber auch jeweils unmittelbar unterhalb des Düsenstockes 3 enden, den sie versorgen. Dies gilt auch für einen Düsenstock 3 aus neun Düsen 2, bei welcher entsprechend Figur 3 die vertikale Zuführungsleitung 1 ebenso wie beim Düsenstock 3 gemäß Figur 2 mittig angeordnet ist und bei welcher zu den nicht unmittelbar an der Zuführungsleitung 1 sitzenden Düsen 2 horizontale Abzweigungsleitungen 8 führen, wie dies bei dem Düsenstock 3 gemäß Figur 2 ebenfalls der Fall ist.

Bezugszeichenliste:

1 Zuführungsleitungen
2 Düsen
3 Düsenstock
4 Sammelleitung
5 Abgaskanal
6 Kanalboden
7 Drosselventile
8 Abzweigungsleitungen

**Ansprüche**

1. Vorrichtung zum Dosieren von $NH_3$ oder dergleichen Reduktionsmittel in den Abgasstrom einer Anlage zur selektiven Kontaktreduktion von Stickoxiden mit über den Abgaskanalquerschnitt verteilten Reduktionsmittelaustrittsöffnungen, von welchen jeweils mehrere gemeinsam mit einer Zuführungsleitung (1) verbunden sind, dadurch gekennzeichnet, daß die Reduktionsmittelaustrittsöffnung von Düsen (2) gebildet sind, welche in Gruppen flächenmäßig in gleichen oder im wesentlichen gleichen Abständen (a) voneinander über einen Teilflächenbereich des Abgaskanalquerschnittes verteilt und zu je von einer gemeinsamen Zuführungsleitung (1) versorgten, über den gesamten Abgaskanalquerschnitt in gleichen oder im wesentlichen gleichen Abständen (A) voneinander verteilten Düsenstöcken (3) zusammengefaßt sind, und daß die Durchflußmengen an Reduktionsmittel für jeden aus einer Gruppe von Düsen (2) bestehenden Düsenstock (3) oder zumindest einigen dieser Druckstöcke (3) unabhängig von den anderen Düsenstücken (3) einstellbar ist.

2. Vorrichtung nach Anspruch 1, dadurch gekennzeichnet, daß jeweils zwischen vier und neun Düsen (2) zu einem Düsenstock (3) zusammengefaßt sind.

3. Vorrichtung nach Anspruch 1 oder 2, dadurch gekennzeichnet, daß die Düsen (2) als Freistrahldüsen ausgebildet sind.

4. Vorrichtung nach einem der Ansprüche 1 bis 3, dadurch gekennzeichnet, daß die Düsen (2) in Strömungsrichtung des Abgases ausblasen.

5. Vorrichtung nach einem der Ansprüche 1 bis 4, dadurch gekennzeichnet, daß die Größe des von einem Düsenstock (3) be-einflußbaren Teilflächenbereiches zwischen 1 $m^2$ und 4 $m^2$ liegt.

6. Vorrichtung nach einem der Ansprüche 1 bis 5, dadurch gekennzeichnet, daß die Zuführungsleitungen (1) und die Düsen (2) so ausgelegt sind, daß der Hauptdruckverlust in den Düsen (2) erfolgt.

7. Vorrichtung nach einem der Ansprüche 1 bis 6, dadurch gekennzeichnet, daß die Zuführungsleitungen (1) für je eine Reihe von Düsenstöcken (3) in Abgasströmungsrichtung fluchtend hintereinander angeordnet sind.

8. Vorrichtung nach einem der Ansprüche 1 bis 7, dadurch gekennzeichnet, daß die Zuführungsleitungen (1) den Abgaskanalquerschnitt, z.B. von oben nach unten, vollständig durchqueren.

9. Vorrichtung nach einem der Ansprüche 1 bis 7, dadurch gekennzeichnet, daß die Zuführungsleitungen (1) nur jeweils bis zu dem zugehörigen Düsenstock (3) führen.

10. Vorrichtung nach einem der Ansprüche 1 bis 9, dadurch gekennzeichnet, daß mehrere oder vorzugsweise alle Zuführungsleitungen (1) von einer gemeinsamen Sammelleitung (4) ausgehen.

beeinflußbarer
Teilflächenbereich

FIG. 1

EP 0 311 758 A1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | DE-U-8 803 103 (DEUTSCHE BABCOCK) * Figuren; Seite 7, Zeile 15 - Seite 10, Zeile 10 * --- | 1 | B 01 D 53/36 |
| A | DE-U-8 612 710 (BLOOM ENGINEERING) --- | | |
| A | DE-A-2 733 356 (HITACHI SHIPBUILDING) ----- | | |
| | | | **RECHERCHIERTE SACHGEBIETE (Int. Cl.4)** |
| | | | B 01 D |
| | Der vorliegende Recherchenbericht wurde für alle Patentansprüche erstellt | | |

| Recherchenort | Abschlußdatum der Recherche | Prüfer |
|---|---|---|
| DEN HAAG | 17-01-1989 | BOGAERTS M.L.M. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument